Europäisches Patentamt

European Patent Office

Office européen des brevets

(19)

(11) Publication number: **0 091 495**
**A1**

(12) **EUROPEAN PATENT APPLICATION**

(21) Application number: **82103022.8**

(22) Date of filing: **08.04.82**

(51) Int. Cl.³: **C 05 F 9/04**

(43) Date of publication of application:
**19.10.83 Bulletin 83/42**

(84) Designated Contracting States:
**AT BE CH DE FR GB IT LI LU NL SE**

(71) Applicant: **Soli, Romano**
**12, Via del Sagittario Traversa E**
**I-41100 Modena(IT)**

(72) Inventor: **Soli, Romano**
**12, Via del Sagittario Traversa E**
**I-41100 Modena(IT)**

(74) Representative: **Gardi, Giuliano**
**Gardipatent Palazzo Prora 605, Via Giardini**
**I-41100 Modena(IT)**

(54) **Process and means for transforming liquid and solid waste and biodegradable mud/slime into fertilizer, using earth worms.**

(57) The process is one of introducing solid, liquid and/or mud waste along with biodegradable organic refuse into the body of earthworms, adding air in order to supply the latter with oxygen, and water for the purpose of counteracting heat produced by fermentation, extracting fumes and making provision for stirring the central body of the mass of worms and waste. The contrivance consists of one or more silos (1 or 39) ten metres or more in height set singly or disposed in batteries and with a tapered lower region; each silo furnished with tubes (29) having radially-set holes (30) for passage of water and air, as well as an axial agitator screw (25) likewise with holes (26) for passage of mud, air and cooling water; there being perforated side-wall sectors (7 & 8) with corresponding inlet and outlet chambers (9) allowing expulsion of fumes; ultimate extraction of the end-product fertilizer brought about by alternating draw-off trays (16) passing back and forth across the silo lower orifice.

EP 0 091 495 A1

./...

Fig.1

Process and means for transforming liquid and solid waste
and biodegradable mud/slime into fertilizer, using earth-
worms.

The invention described herein relates to a method and relative means by which to transform both solid and liquid waste
and biodegradable muds into fertilizer, utilizing earthworms
for the purpose; a new process and contrivance in which earthworms -or suitable annelids in general- provide the vehicle
by means of which to obtain mineral fertilizer for agricultural use, this in the guise of excrement passed from solid
urban waste, liquid livestock waste, residual slime from
water-purification, waste produced by foodstuffs, paper and
textile factories -all such waste and refuse etc. being of
a biodegradable nature.

The prior art takes in a method of transforming such waste
wherein earthworms are laid out on the ground in strata or
heaps to a maximum depth of 50 centimetres whereupon refuse
-muddy waste in particular- is duly rained onto the worms
and the area protected by a cover-sheet of canvas or the
like. The depth of such layers may not be increased as heat
given off during fermentation of solid or only slightly-dilute
organic waste heaped thus deeper would destroy the worms by
overheating; the worms' demise would be brought on equally
effectively by suffocation due to fumes given off by fermentation proper within the strata, there being little oxygen
available as a rule; the depth-increase would be unproductive
moreover, as worms would tend to occupy the upper 5 to 10 cm
of the layer in greater number -driven thence by the need
for necessary oxygen- and fail to work on a cost-effective
amount of refuse; lastly, cold will also kill off earthworms
should the layer be insufficiently deep as to produce a
temperature of below 0°C, indeed the process of conversion
already falls off in effectiveness below 5°C.

The prior art thus illustrated stands in need of improvement
with regard to the following aspects: the need for an increas-
ed depth of earthworm strata by means of which to economize
on surface area demanded by the process; the need for extraction of fertilizer from the lower region of the heap by mechanical means thus obviating the necessity for employing skilled labour and special equipment -operatives being hard to find due to the somewhat hazardous hygiene conditions; a more rational system of introducing refuse of whatever kind -solid, liquid or mud- into the mass of worms; creation of an environment in which the worms may subsist whilst working with the greatest possible efficiency -viz. by avoiding overheating within the mass, and guarding against lack of oxygen, stagnation of fumes and temperature-drop below 5°C; in addition the need for dispensing both with dead time and with exposure of operatives to fumes and to pathogenic agents in the refuse itself.

The foregoing outline demonstrates the need for a solution to the technical problem posed by an earthworm medium conversion process capable of transforming any kind of biodegradable organic waste more rapidly, more profitable, with greater economy and in enhanced conditions of hygiene.

The invention resolves the above technical problem by adopting an earthworm-medium conversion process which makes provision for: -introduction of air into the mass of worms and extraction therefrom of suffocation-inducing fumes; diffusion of water through the said mass in order to avoid overheating; uniform distribution of worms throughout the mass of liquid, mud or solid waste; protection against low temperatures; automatically operated extraction of fertilizer from the mass lower region; -the process being achieved in a continuous cycle with no. need whatever for specialized personnel, and to that end employing a contrivance wherein earthworms and organic refuse are deposited in an open-top silo of up to ten metres or more in height containing all such tubes as are necessary to introduction and distribution of mud and/or liquid waste, air and water as well as means for agitation thereof, solid refuse being simply dropped thereinto from above; evacuation of fumes being brought about by an arrangement of perimeter grilles and suction and outlet chambers; the lower region of the silo tapered and terminating in a fast-discharge orifice whence an alternating tray-system despatches fertilizer onto a conveyor belt.

Advantages furnished by the invention are: drastic reduction in ground-area requirement for waste-to-fertilizer processes of the kind, by virtue of the vertically-expanded design; introduction of waste and extraction of fertilizer brought about at speed; even distribution of earthworms throughout the mass of refuse due to diffusion of cooling-water and oxygen therein and to removal of fermentation fumes therefrom, giving rise to a fertilizer porduction-rate of some hundred or two-hundred percent or more with respect to the traditional method as per the prior art; elimination of dead-time; marked reduction in labour; downgrading of operatives' skill-requirement; god conditions of hygiene, and reduction of the production cost per weight unit.

Certain possible ways of embodying the invention are illustrated -by way of example- in the 6 sheets of drawings attached, in which:

Fig 1 is the vertical section through the contrivance as embodied in a single outer casing, of cylindrical cross-section for instance;

Fig 2 is the transverse section through II-II in Fig 1;

Fig 3 is the section through III-III in Fig 1;

Fig 4 shows the plan of the contrivance embodied as a battery of rectangular-section elements, seen in part-transverse-section as follows:the first two lines of the battery at an intermediate height; the two central lines at a level below that of the discharge-orifice; the last two through a plane immediately below receptacles uppermost wherein solids, mud and water are deposited;

Fig 5 is the vertical longitudinal section through V-V in Fig 4, seen on a larger scale the better to illustrate internal composition of the battery;

Fig 6 is a transverse section through VI-VI in Fig 5 showing the arrangement whereby air is introduced and protein-fermentation fumes expelled -the latter being harmful to earthworms;

Fig 7 is the vertical transverse section through VII-VII in Fig 4 which likewise shows the arrangement aforesaid of air-and-fume ducts, and illustrates refuse receptacles employed by the battery.

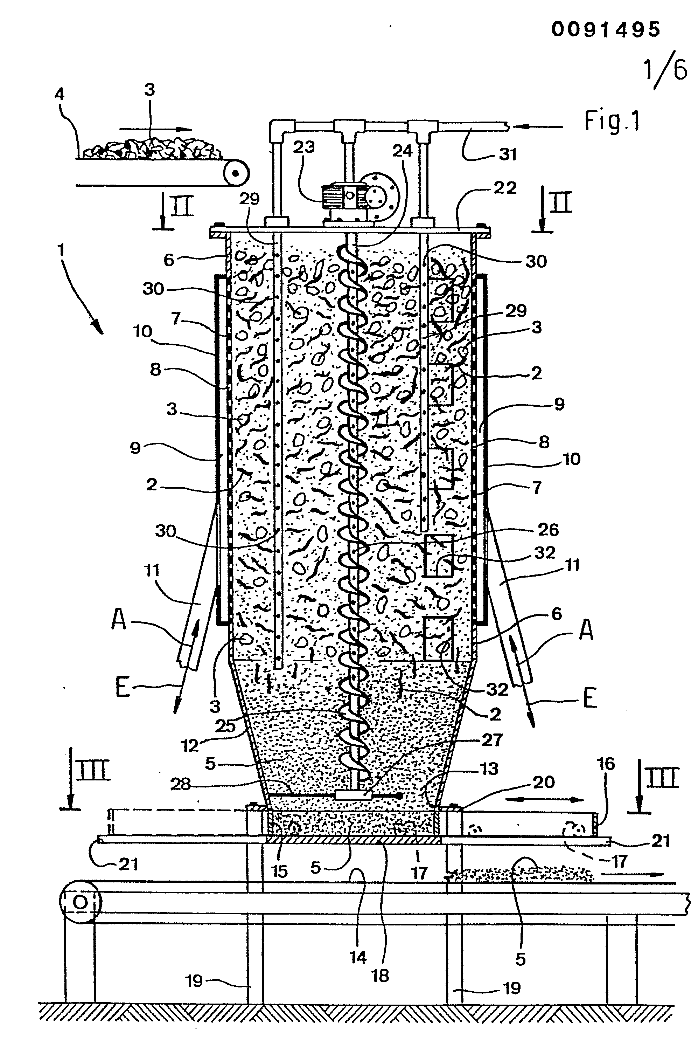

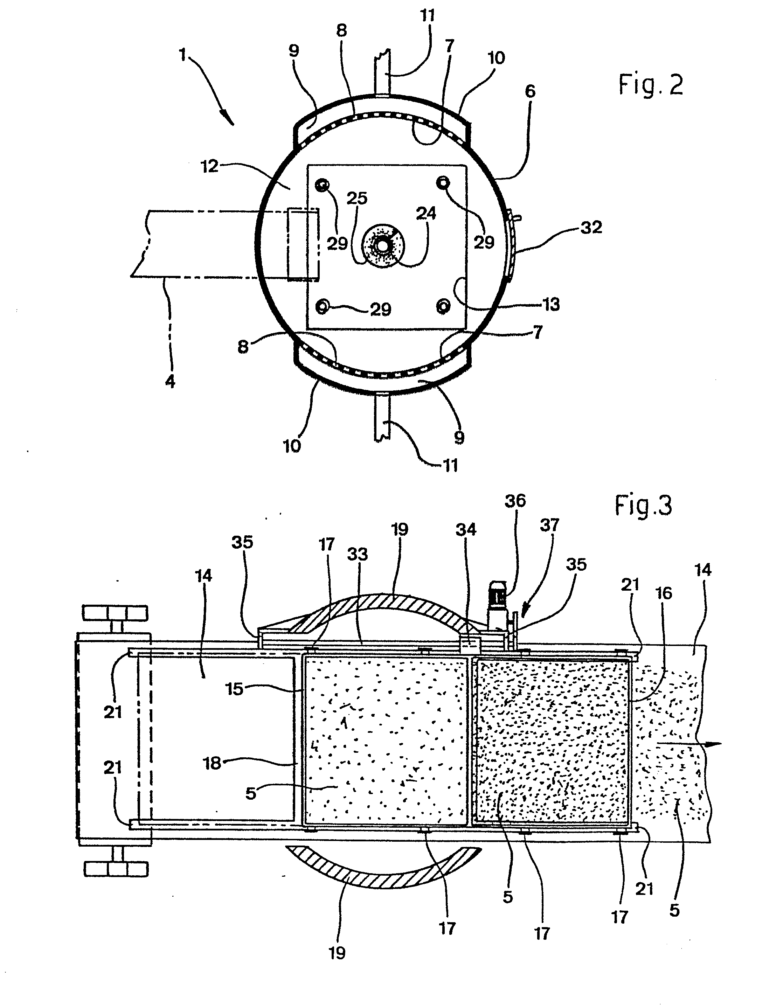

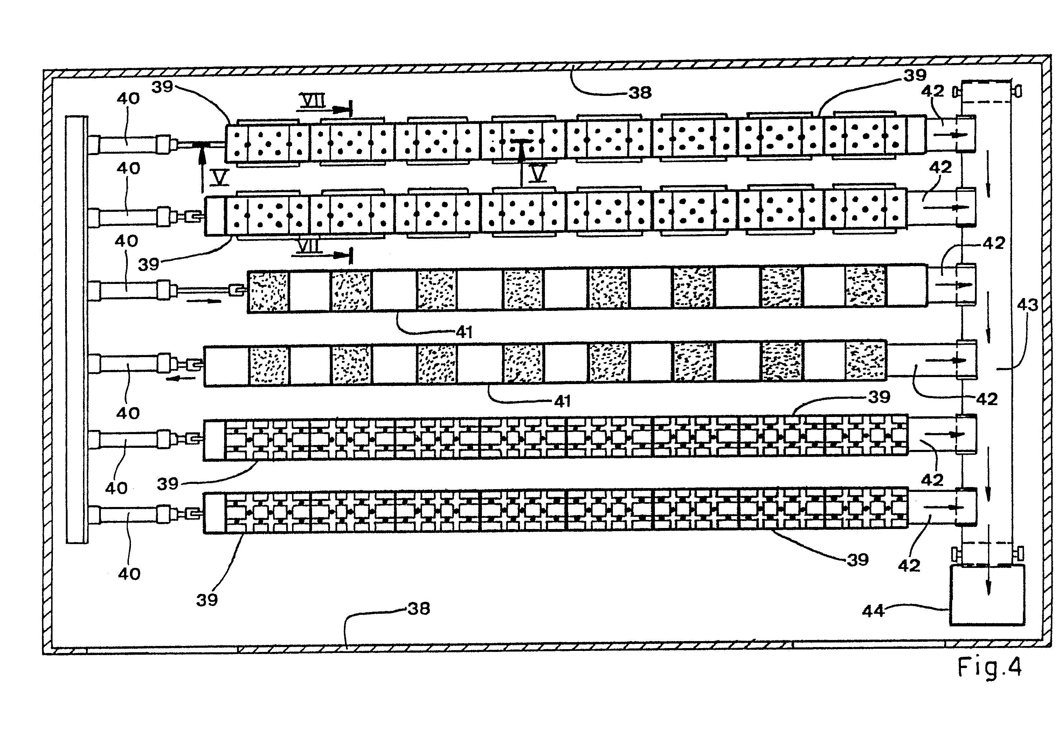

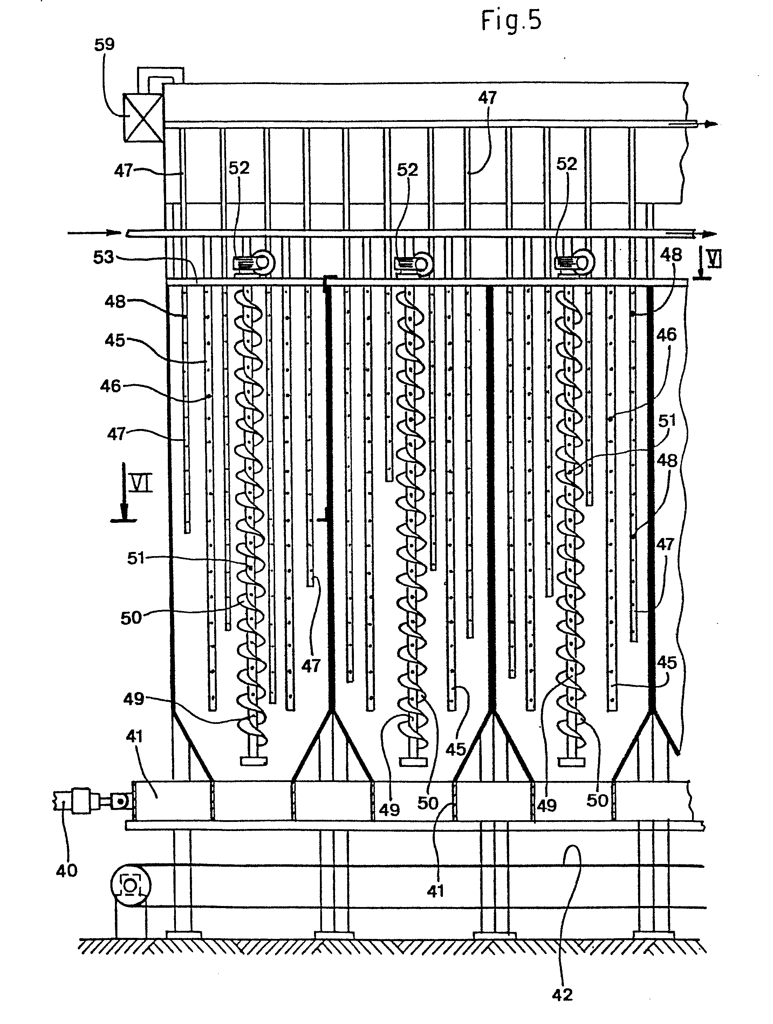

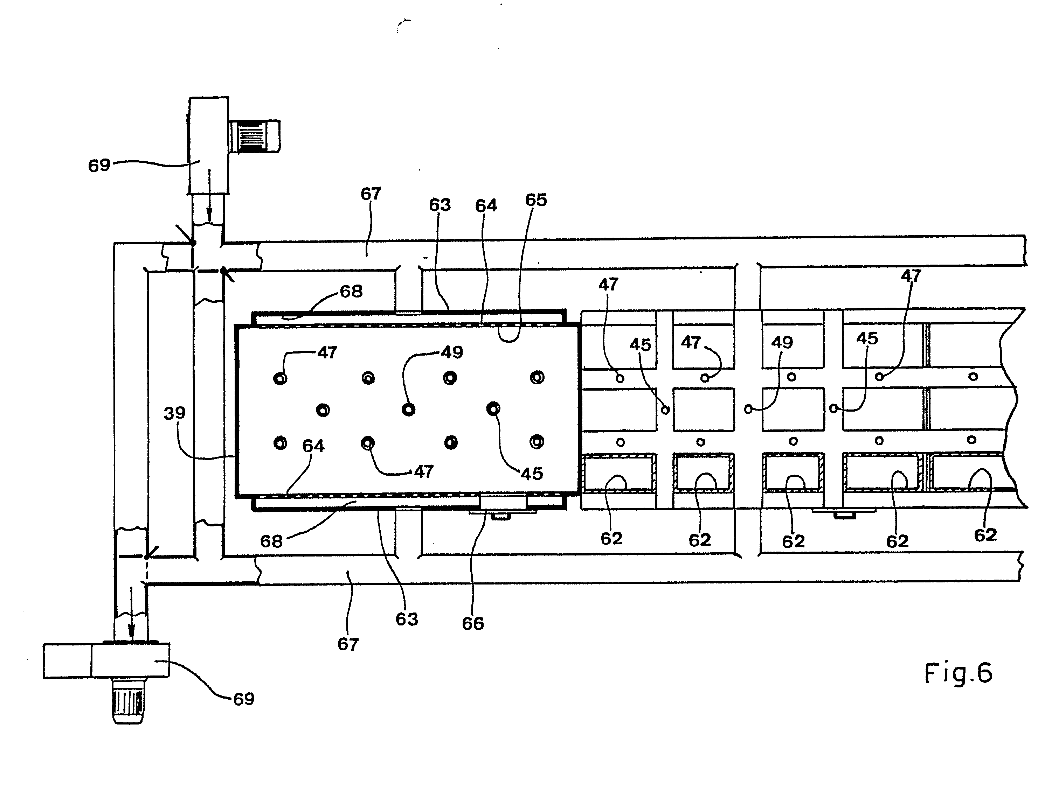

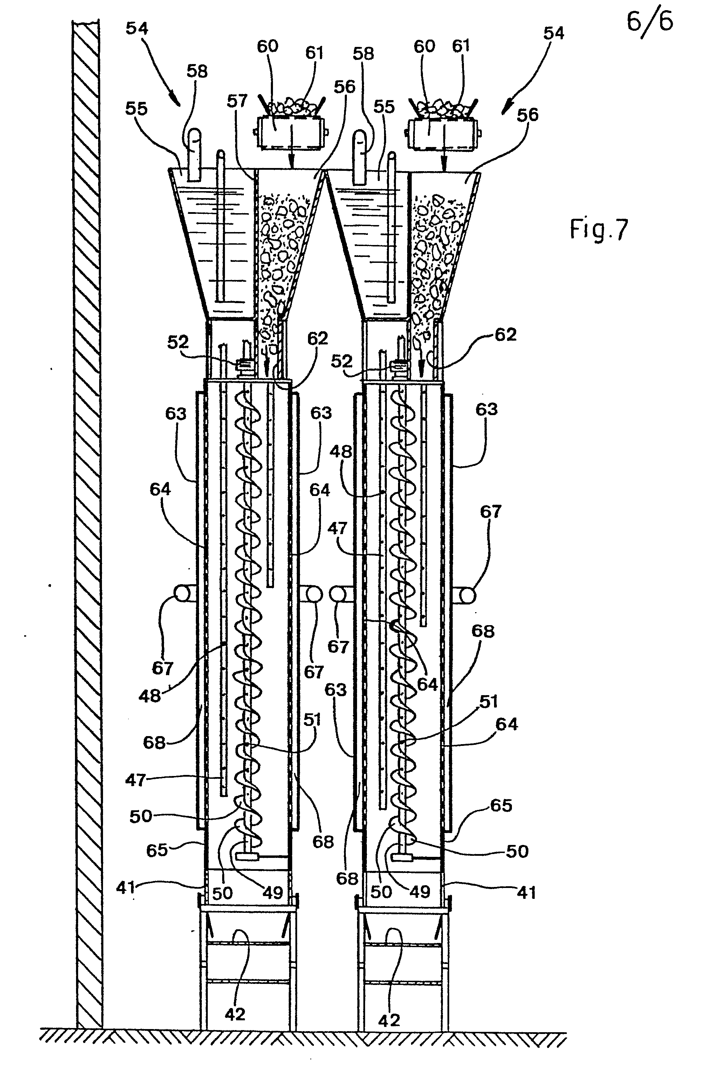

With reference to the drawings, 1 denotes a silo into which a load of earthworms 2 is introduced for the purpose -amongst other things- of transforming solid waste 3 brought to the silo-top by conveyor 4 into organic fertilizer 5; silo 1 is furnished with a cylindrical outer casing 6, a portion of whose wall 7 carries perforations 8 of some 5mm diameter forming a grille through which air A may enter at the one side whilst fumes E given off by fermentation of refuse may be extracted from the other by fans not illustrated in the drawing, entry A and exit E being worked in alternation; 9 denotes chambers located about grilles 7 - 8 created by sector-profile jackets 10 and the sector-portions 7 of casing 6; 11 denotes inlet/outlet conduits for air A and fumes E respectively; the lower end of silo 1 is in the form of an upturned pyramid 12 and affords the exit passage for fertilizer 5 by way of square or rectangular orifice 13 down onto conveyor belt 14 for ultimate removal, transit between the latter two being by way of twin distributor-trays 15 and 16 traversing in alternation longitudinally on wheels 17; the silo proper 1 - 12 comprises a baseplate 18, the entire assembly mounted onto a supporting framework 19 by way of a flange 20; 21 denotes guiderails on which tray 15 - 16 is caused to traverse; a crossmember 22 at the silo upper entry provides for the fixture of a gearmotor 23 driving the hollow shaft 24 of a screw 25 whose function is that of mixing the mass within the actual silo 1 - 12; holes 26 located in shaft 24 - of 1cm diameter for instance- serve for injection of liquid or mud waste and air and water into the overall mass according to requirement, the lower extremity of shaft 24 turning on mounting 27 suspended from a radially-disposed element 28 located toward the lower end of silo 1 -12; 29 denotes a number of vertical tubes varying in length and open at bottom, exhibiting radially-set holes 30 -likewise of the order of 1cm diameter- for introducing liquid or mud waste and water and air necessary both to dilution and cooling of the waste compound which if allowed to ferment freely will cause harm to the worms, 31 denotes pipework for delivering waste, air and water in the desired proportions; inspection viewers in the silo wall are represented by 32; in Fig 3, a lead screw 33 coupled with female thread 34 affixed to tray 15-16 at an intermediate lateral location provides for movement of the latter, screw 33 being fitted between anchor points 35 and rotating thus when in receipt of drive from gearmotor 36 by way of geartrain 37. With reference to Fig 4, 38 represents a shed or similar structure housing batteries of rectangular-section silos 39 whose lower orifice is contrived by inward and downward inclination of two logitudinals of the single silo thus affording a tapered exit-profile. 40 denotes horizontally-disposed double-acting oil-hydraulic cylinders, each one actuating a row of distributor-trays 41 drawing off fertilizer from the sigle silos 39 lined up in batteries and dropping same onto corresponding conveyor belts 42, the latter feeding transverse exit conveyor 43; 44 denotes the bin , or barrow in which the end-product is taken away for use. With reference to Figs 5, 6 and 7, vertical tubes denoted by 45 exhibit radially-set holes 46 with -for instance- a diameter-increase of 2 to 6mm from top to bottom, for the purpose of pumping air into the mass; 47 denotes open-bottom tubes of varying length furnished with radially-set holes 48 of approx. 1cm diameter through which liquid or mud waste and water are introduced; the hollow shaft 49 of a screw 50 exhibits holes 51 through which air and water may be passed, shaft 49 driven by a gearmotor 52 mounted to framework 53 and capable of driving a number of like shafts 49 given the appropriate transmission; 54 denotes a hopper-head divided into two sections 55 and 56 by partition 57, the one side of which in receipt of luqid or mud waste and perhaps water, the other receiving solid refuse; an inlet conduit 58 fed by pump 59 fills receptacle 55 with aforesaid liqids, the said pump being that distributing liquids to the tubes 47 of one or more batteries of silos; 60 denotes the conveyor belt bringing on solid refuse 61; receptacle 56 connects with the silo 39 interior by way of a chute 62 affording free fall of solids 61 thereinto; 63 denotes jackets located at the sides of silos 39 for the purposes of pumping air into and withdrawing fumes from within the silo interior by way of holes 64 in the silo side-walls; viewers 66 provide for inspection of the interior; conduits 67 take air into and withdraw fumes from the chambers 68 created by jackets 63; fans are represented by 69 in Fig 6. With regard to the embodiment in Fig 1, function is as follows: the empty silo 1 is filled with approximately 5cm-deep layers of earthworms 2 and faeces direct from rearing, alternated with approx. 2cm-deep layers of solid or mud waste, this being carried out by introduction through inspection flaps 32; the worms subsist thus on existing refuse and air contained therein for a period of some hours -maximum one whole day, heat and fumes given off during this time will not reach any level likely to give concern, hence no need for auxiliary media as yet; at the end of this initial stage a fan is switched on and air forced in through chamber 9 and grille 7 -8 giving oxygen to the worms, whilst fermentation fumes are extracted by the same route at the opposite side of the silo, by expulsion; air thus introduced assists in keeping temperature stable at the optimum 25°C, preventing the possibility of its rising beyond the limit of 30 - 35°C; with the exhaustion of such air as exists in the lower tapered portion of silo 1, the worms 2 rise to that part of the interior through which air passes thus vacating the silo lower region for collection of their excrement -i.e. manure, or organic fertilizer 5 which will be subsequently removed by periodic actuation of tray 15-16 and deposited thence onto conveyor 14; in the event of the end-product being only part-digested this same coneyor provides for re-transfer onto conveyor 4 and a second passage through the silo; with the gradual conversion into faeces by worms 2 of refuse initially introduced in layers, the level of the total bulk will drop wheter or not material has already been drawn off at the silo-orifice, whereupon liquid and/or mud waste may duly be introduced through the holes 30 of tubes 29 and, ultimately, through holes 26 in the hollow shaft 24 of screw 25, solids being dropped in from above 3 by conveyor 4; in the event of such air as entered through grilles 7 - 8 being insufficient for stabilizing temperature within predetermined limits, air and water may be sent in through said tubes 29 and 24; water is required for the additional function of diluting waste in the silo to the correct consistency. With the passage of a few months the worms will have multiplied considerably, hence the need for drawing off a certain proportion by working tray 15-16 with sufficient rapidity to disallow their working upward within lower region 12 or by way of inspection flaps 32. Worms 2 and manure 5 extracted thus may then be separated by revolving riddle, the worms themselves then despatched into a further silo, and so forth. The battery embodiment illustrated in Figs 4, 5, 6 and 7 functions in precisely the same fashion.

When carrying the invention into effect, the materials and dimensions suggested, as well as the design particulars, means for imparting alternating movement to trays whether of the single or battery embodiment, and means by which air, water, liquid, muddy and solid waste enter the silo may all differ from those described, whilst retaining techincal equivalence and by no means straying from within bounds of protection afforded to the invention as claimed hereinafter; moreover the contrivance thus described may be utilized for direct conversion into earthworm-fertilizer of -for instance, fowl and livestock droppings -especially those produced by rabbits- this achieved by installation of a silo type-1 of the first embodiment approximately 50 to 150cm high with or without screw 25 beneath the runs housing such animals; furthermore, silos of some considerable height or with a particularly large diameter may incorporate two or more screws as per single screw 25 -or indeed other multiple means for mixing in general. Lastly, hopper-head partitions 55 and 56 may assume multiple form as a series of sectors to a circle, each communicating direct with the silo interior the better to achieve even distribution therein of waste and water.

## CLAIMS

1. Process for transforming biodegradable solid, liquid and mud waste into organic fertilizer utilizing earthworms wherein said solid-liquid-and-mud waste is introduced into the mass of worms, characterized by the fact that a vertically-disposed mass of refuse and worms, arranged at the outset in alternate layers such that several-centimetre-deep strata of earthworms predominate over solid and/or mud waste strata of a few centimetres depth, is subsequently in receipt: -both of air affording oxygen to said worms and expelling fermentation fumes whilst maintaining temperature within said mass at an optimum 25°C approx. -at any rate no higher than 30 to 35°C; -and of water for cooling said mass and combining with air aforesaid in maintaining temperature within predetermined limits in addition to dilutingsolid and/or mud waste residue from said initial or from sucessive introductions of waste into the mass; such conditions enabling earthworms to disperse uniformly throughout the decidedly preponderant upper region of said mass being in receipt of agents aforesaid whilst leaving the lower region of said mass vacant, this receiving no such additions and serving to accumulate matter excreted by the earthworms prior to removal thereof; the innermost regions of said mass being subjected to a mixing action.

2. Contrivance according to the process established by claim 1 characterized by the fact that it comprises an open-top silo of up to ten metres and more in height and of circular or polygonal cross-section uppermost which may be installed singly or in batteries, the lower region (12) of which tapers downward to terminate in a rectangular or square orifice (13) whereunder a bottomless twin distributor tray (15-16) moves back and forth in alternation upon wheels (17) between said orifice and the silo baseplate (18), borne up by guiderails (21) and serving to transfer manure (5) digest by earthworms (2) onto a conveyor belt (14) below.

3. Contrivance according to the process in claim 1 and the substance of claim 2 characterized by the fact that given sectors of the evenly-developed silo wall exhibit grilles (7 and 8) of disposition such as to form chambers (9) with corresponding outer jackets (10) furnished with conduits (11) by way of which air may be introduced into the mass from the one side and fumes given off therein expelled from the other, and vice-versa, in alternation.

4. Contrivance according to the process in claim 1 and the substance of claim 2 characterized by the fact that one or more vertically-disposed screw/s (25) installed within the silo pivot/s between and with respect to an upper cross-member or framework (22) and a lower radially-disposed manting (28), driven thus by one or more gearmotor/s (23); the shaft/s (24) of said screw/s being hollow and provided with radially-set holes (26) through which air, water and liquid or mud waste may be introduced into the mass.

5. Contrivance according to the process in claim 1 and the substance of claim 2 characterized by the fact that open-bottom tubes (29) exhibiting radially-set holes (30) penetrate the inner regions of the silo for the purpose of introducing air, water and liquid or mud waste into the mass.

6. Contrivance according to the process in claim 1 and the substance of claim 2 characterized by the fact that solid refuse (3) either falls free into the silo from conveyor belts (4 or 60)thereabove, or enters therein by way of one or more hopper-head sectors (56) from whose lower extremity a chute (62) communicates with the mass contained within the silo.

7. Contrivance according to the process in claim 1 and the substance of claim 2 characterized by the fact that the silo is furnished uppermost with one or more hopper-head sectors (55) contianing water or liquid waste and communicating at bottom with the mouths of vertical tubes (47) exhibiting radially-set holes (48) for passage of said liquid or water into the bulk of waste within the silo.

Fig.1

Fig. 2

Fig. 3

Fig.4

Fig.5

Fig.6

Fig.7

# EUROPEAN SEARCH REPORT

## DOCUMENTS CONSIDERED TO BE RELEVANT

| Category | Citation of document with indication where appropriate, of relevant passages | Relevant to claim | CLASSIFICATION OF THE APPLICATION (Int Cl 3) |
|---|---|---|---|
| A | --- <br> CHEMICAL ABSTRACTS, vol. 94, no. 26, 29th June 1981, page 344, no. 213988f, Columbus, Ohio, USA CAMP DRESSER et al.: "Compendium on solid waste management by vermicomposting" & U.S. ENVIRON. PROT. AGENCY, OFF. RES. DEV., (REP.) EPA 1980, EPA-600/8-80-033, 69 pp. * Abstract * | 1 | C 05 F 9/04 |
| A | --- <br> CHEMICAL ABSTRACTS, vol. 94, no. 8, 23rd February 1981, page 329, no. 52353c, Columbus, Ohio, USA B.A. ROSSI et al.: "Annelidic recycling of organic waste" & CONGR. PROC. - RECYCLING WORLD CONGR. 1979, 2nd(1), II/6/165-II/6/171 * Abstract * | 1 | |
| A | --- <br> CHEMICAL ABSTRACTS, vol. 95, no. 18, 2nd November 1981, page 342, no. 156026k, Columbus, Ohio, USA & JP - A - 81 67597 (M. SHINMI et al.) 06-06-1981 * Abstract * | | TECHNICAL FIELDS SEARCHED (Int. Cl 3) <br><br> C 05 F 13/00 |
| A | --- <br> US-A-4 093 546 (JIRI TABORSKY) | | |
| A | --- <br> US-A-3 635 816 (GERALD GOLUB) | | |
| | ----- | | |

The present search report has been drawn up for all claims

| Place of search <br> THE HAGUE | Date of completion of the search <br> 22-10-1982 | Examiner <br> STEELANDT B. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& member of the same patent family, corresponding document

EPO Form 1503 03 82